# EUROPEAN PATENT APPLICATION

(11) **EP 4 660 691 A1**
(43) Date of publication of application: **10.12.2025**
(21) Application number: 24832277.8
(22) Date of filing: 28.05.2024
(51) Int. Cl.: G02B 30/29, G02B 3/00, G02B 27/28, H04N 13/305

(54) **DISPLAY MODULE, ELECTRONIC DEVICE, AND CONTROL METHOD OF ELECTRONIC DEVICE**

(30) Priority: 28.06.2023 KR 20230083711; 18.10.2023 KR 20230139705
(71) Applicant: Samsung Electronics Co., Ltd., Suwon-si, Gyeonggi-do 16677 (KR)
(72) Inventor: MOON, Seokil, Suwon-si Gyeonggi-do 16677 (KR); SHIN, Bongsu, Suwon-si Gyeonggi-do 16677 (KR); SONG, Hoon, Suwon-si Gyeonggi-do 16677 (KR); LEE, Changkun, Suwon-si Gyeonggi-do 16677 (KR)
(74) Representative: Appleyard Lees IP LLP
(86) International application number: PCT/KR2024/007249
(87) International publication number: WO 2025/005495

(57) **Abstract**

A display module includes: a light emitter configured to emit light corresponding to image data through a plurality of pixels; a polarization adjuster configured to, based on a request to provide an image in three dimensions or two dimensions, adjust a polarization of light incident from the light emitter to a first polarization or a second polarization different from the first polarization; a geometric phase lens configured to operate as a convex lens or a concave lens based on the polarization of light incident from the polarization adjuster; and a lenticular lens configured to output light incident from the geometric phase lens in a preset direction, wherein, based on the light emitted from the light emitter being adjusted to the first polarization through the polarization adjuster, the geometric phase lens is configured to operate as the convex lens, and the light incident on the lenticular lens from the geometric phase lens operating as the convex lens is refracted by the lenticular lens and output in a first direction to provide a 3D image, wherein, based on the light emitted from the light emitter being adjusted to the second polarization through the polarization adjuster, the geometric phase lens is configured to operate as the concave lens, and the light incident on the lenticular lens from the geometric phase lens operating as the concave lens is transmitted through the lenticular lens and is output in a second direction to provide a 2D image, and wherein the second direction is different from the first direction

## Description

### [Technical Field]

The disclosure relates to a display module, an electronic device, and a controlling method of the electronic device; and more particularly, to a display module that provides both two-dimensional (2D) and three-dimensional (3D) images, an electronic device including the display module, and a controlling method thereof.

### [Background Art]

Technology for providing three-dimensional (3D) images has been developing, and in particular, the development of a technology for two-dimensional/three-dimensional (2D/3D) switching displays, which may provide both 2D/3D images without the need for auxiliary equipment such as 3D glasses, has accelerated.

In the related art, there is a technology that implements 2D/3D switching by forming a lens using anisotropy of liquid crystal molecules with different refractive indices depending on a polarization of light and adjusting the polarization of light emitted through a display panel.

When providing the 3D image according to the related art, a focal length of the lens needs to be short in order for the 3D image to have a wide viewing angle, and the focal length of the lens becomes shorter as a difference between a refractive index of the liquid crystal molecules and a refractive index of the surrounding medium increases.

However, in the case of the liquid crystal molecules, a difference between a refractive index for vertically polarized light and a refractive index for horizontally polarized light is only about 0.2, and the refractive index of the surrounding medium needs to be equal to the smaller refractive index of the refractive index of the liquid crystal molecules for the vertically polarized light and the refractive index for the horizontally polarized light.

Therefore, according to the related art, there is a limitation that it is difficult to make the difference in refractive index between the liquid crystal molecules and the surrounding medium large, which leads to the problem of not being able to provide a 3D image with a wide viewing angle.

### [Disclosure]

[Technical Solution]Provided are a two-dimensional/three-dimensional (2D/3D) switching display module capable of providing a 3D image with a wide viewing angle, an electronic device including the display module, and a controlling method thereof.

According to an aspect of the disclosure, a display module may include: a light emitter configured to emit light corresponding to image data through a plurality of pixels; a polarization adjuster configured to, based on a request to provide an image in three dimensions or two dimensions, adjust a polarization of light incident from the light emitter to a first polarization or a second polarization different from the first polarization; a geometric phase lens configured to operate as a convex lens or a concave lens based on the polarization of light incident from the polarization adjuster; and a lenticular lens configured to output light incident from the geometric phase lens in a preset direction, wherein, based on the light emitted from the light emitter being adjusted to the first polarization through the polarization adjuster, the geometric phase lens is configured to operate as the convex lens, and the light incident on the lenticular lens from the geometric phase lens operating as the convex lens is refracted by the lenticular lens and output in a first direction to provide a three-dimensional (3D) image, wherein, based on the light emitted from the light emitter being adjusted to the second polarization through the polarization adjuster, the geometric phase lens is configured to operate as the concave lens, and the light incident on the lenticular lens from the geometric phase lens operating as the concave lens is transmitted through the lenticular lens and is output in a second direction to provide a two-dimensional (2D) image, and wherein the second direction is different from the first direction.

The polarization adjuster may be further configured to: based on the request being the request to provide the image in three dimensions, adjust a polarization of the light incident from the light emitter to the first polarization, and based on the request being the request to provide the image in two dimensions, adjust the polarization of the light incident from the light emitter to the second polarization.

The polarization adjuster may be provided between the light emitter and the geometric phase lens.

Tithe lenticular lens may be a lens array including a plurality of sub-lenses arranged at preset intervals.

The polarization adjuster may include a linear polarizer configured to linearly transform a polarization of the light emitted through each of the plurality of pixels, and an active quarter-wave plate (active QWP) configured to adjust the light incident through the linear polarizer to right circularly polarized or left circularly polarized.

A first focal length of the geometric phase lens and a second focal length of the lenticular lens are the same, and based on the geometric phase lens operating as the convex lens, a third focal length of light passing through both the geometric phase lens and the lenticular lens may be half of the first focal length and the second focal length.

The first direction may be a direction for mapping directions of each light emitted through each of the plurality of pixels to one of a plurality of views for providing the 3D image.

Each of the plurality of pixels may include a plurality of sub-pixels, the plurality of sub-pixels may include a first sub-pixel configured to emit red light, a second sub-pixel configured to emit green light, and a third sub-pixel configured to emit blue light, and the first direction may be a direction for mapping directions of each light emitted through each of the plurality of sub-pixels to one of the plurality of views that compensate for chromatic aberration of the geometric phase lens while providing the 3D image.

The display module may further include a gradient-index (GRIN) lens configured to have a different refractive index depending on a position within a lens, and the different refractive index depending on the position within the lens may be set to compensate for chromatic aberration of the geometric phase lens.

The geometric phase lens may be formed using a meta atom, and the meta atom may be provided in the geometric phase lens based on a phase profile that compensates for optical aberrations of the lenticular lens.

According to an aspect of the disclosure, an electronic device includes: a display module; at least one memory configured to store instructions; and at least one processor configured to execute the instructions to control the display module to provide a three-dimensional (3D) image or a two-dimensional (2D) image, wherein the display module may include: a light emitter configured to emit light corresponding to image data through a plurality of pixels; a polarization adjuster configured to, based on a request to provide an image in three dimensions or two dimensions, adjust a polarization of light incident from the light emitter to a first polarization or a second polarization different from the first polarization; a geometric phase lens configured to operate as a convex lens or a concave lens based on the polarization of light incident from the polarization adjuster; and a lenticular lens configured to output light incident from the geometric phase lens in a preset direction, wherein, based on the light emitted from the light emitter being adjusted to the first polarization through the polarization adjuster, the geometric phase lens is configured to operate as the convex lens, and the light incident on the lenticular lens from the geometric phase lens operating as the convex lens is refracted by the lenticular lens and output in a first direction to provide the 3D image, wherein, based on the light emitted from the light emitter being adjusted to the second polarization through the polarization adjuster, the geometric phase lens is configured to operate as the concave lens, and the light incident on the lenticular lens from the geometric phase lens operating as the concave lens is transmitted through the lenticular lens and is output in a second direction to provide the 2D image, and wherein the second direction is a different direction from the first direction.

The at least one processor may be further configured to execute the instructions to: based on the request being the request to provide the image in three dimensions, control the light emitter to emit light corresponding to the 3D image and control the polarization adjuster to adjust a polarization of light incident on the polarization adjuster from the light emitter to the first polarization, and based on the request being the request to provide the image in two dimensions, control the light emitter to emit light corresponding to the 2D image and control the polarization adjuster to adjust the polarization of light incident on the polarization adjuster from the light emitter to the second polarization.

The polarization adjuster may be provided between the light emitter and the geometric phase lens.

The lenticular lens may be a lens array including a plurality of sub-lenses arranged at preset intervals.

A first focal length of the geometric phase lens and a second focal length of the lenticular lens are the same, and based on the geometric phase lens operating as the convex lens, a third focal length of light passing through both the geometric phase lens and the lenticular lens may be half of the first focal length and the second focal length.

### [Description of Drawings]

The above and other aspects, features, and advantages of certain embodiments of the present disclosure will be more apparent from the following description taken in conjunction with the accompanying drawings, in which:
FIG. 1 is a diagram illustrating a display module, according to one or more embodiments of the present disclosure;
FIG. 2 is an enlarged view of a portion of the display module, according to one or more embodiments of the present disclosure;
FIG. 3 is a diagram for illustrating a process in which the display module, according to one or more embodiments of the present disclosure, provides a three-dimensional (3D) image;
FIG. 4 is a diagram for illustrating a method of mapping directions of each light emitted through a plurality of pixels, respectively, when providing the three-dimensional image, according to one or more embodiments of the present disclosure;
FIG. 5 is a diagram for illustrating a process in which the display module, according to one or more embodiments of the present disclosure, provides a two-dimensional (2D) image;
FIG. 6 is a diagram for illustrating chromatic aberration that may occur due to a geometric phase lens and a sub-pixel, according to one or more embodiments of the present disclosure;
FIG. 7 is a diagram for illustrating eliminating a view separation phenomenon due to the chromatic aberration of the geometric phase lens, according to one or more embodiments of the present disclosure;
FIG. 8 is a diagram for illustrating a method of manufacturing a geometric phase lens using liquid crystal, according to one or more embodiments of the present disclosure;
FIG. 9 is a diagram for illustrating a method of manufacturing a geometric phase lens using meta atoms, according to one or more embodiments of the present disclosure;
FIG. 10 is a diagram for illustrating one or more embodiments in which a display module includes a GRIN lens;
FIG. 11 is a diagram for illustrating one or more embodiments in which a polarization adjustment unit is arranged over a geometric phase lens and a lenticular lens;
FIG. 12 is a diagram for illustrating a process of providing a 2D image when the polarization adjustment unit is arranged over the geometric phase lens and the lenticular lens, according to one or more embodiments of the present disclosure;
FIG. 13 is a diagram for illustrating a process of providing a 3D image when the polarization adjustment unit is arranged over the geometric phase lens and the lenticular lens, according to one or more embodiments of the present disclosure;
FIG. 14 is a block diagram illustrating a configuration of an electronic device, according to one or more embodiments of the present disclosure; and
FIG. 15 is a flowchart illustrating a method of controlling an electronic device, according to one or more embodiments of the present disclosure.

### [Mode for Invention]

The present disclosure may be variously modified and have one or more embodiments. Example embodiments of the present disclosure will be illustrated in the drawings and be described in detail in the detailed description. However, it is to be understood that the disclosure are not limited to specific embodiments, but include all modifications, equivalents, and substitutions according to example embodiments of the disclosure. Throughout the accompanying drawings, similar components will be denoted by similar reference numerals.

In describing the disclosure, when it is decided that a detailed description for the known functions or configurations related to the disclosure may unnecessarily obscure the gist of the disclosure, the detailed description therefor will be omitted.

In addition, the following example embodiments may be modified in several different forms, and the scope and spirit of the disclosure are not limited to the following example embodiments. Rather, these example embodiments make the disclosure thorough and complete, and are provided to completely transfer the spirit of the disclosure to those skilled in the art.

Terms used in the disclosure are used only to describe example embodiments rather than limiting the scope of the disclosure. Singular forms are intended to include plural forms unless the context clearly indicates otherwise.

In the present disclosure, an expression "have", "may have", "include", "may include", or the like, indicates existence of a corresponding feature (for example, a numerical value, a function, an operation, a component such as a part, or the like), and does not exclude existence of an additional feature.

In the present disclosure, an expression "A or B," "at least one of A and/or B," "one or more of A and/or B," or the like, may include all possible combinations of items enumerated together. For example, "A or B," "at least one of A and B," or "at least one of A or B" may indicate all of 1) a case in which at least one A is included, 2) a case in which at least one B is included, or 3) a case in which both of at least one A and at least one B are included.

Expressions "first", "second", "1st" or "2nd" or the like, used in the present disclosure may indicate various components regardless of a sequence and/or importance of the components, will be used only in order to distinguish one component from the other components, and do not limit the corresponding components.

When it is mentioned that any component (for example: a first component) is (operatively or communicatively) coupled with/to or is connected to another component (for example: a second component), it is to be understood that any component is directly coupled to another component or may be coupled to another component through the other component (for example: a third component).

On the other hand, when it is mentioned that any component (for example, a first component) is "directly coupled" or "directly connected" to another component (for example, a second component), it is to be understood that the other component (for example, a third component) is not present between any component and another component.

An expression "~configured (or set) to" used in the disclosure may be replaced by an expression "suitable for," "having the capacity to," "~designed to," "~adapted to," "~made to," or "~capable of" depending on a situation. A term "~configured (or set) to" may not necessarily mean "specifically designed to" in hardware.

Instead, an expression "~an apparatus configured to" may mean that the apparatus "is capable of" together with other apparatuses or components. For example, a "processor configured (or set) to perform A, B, and C" may mean a dedicated processor (for example, an embedded processor) for performing the corresponding operations or a generic-purpose processor (for example, a central processing unit (CPU) or an application processor) that may perform the corresponding operations by executing one or more software programs stored in a memory device.

In example embodiments, a "module" or a "unit" may perform at least one function or operation, and be implemented by hardware or software or be implemented by a combination of hardware and software. In addition, a plurality of "modules" or a plurality of "~ers/ors" may be integrated in at least one module and be implemented by at least one processor except for a 'module' or an '~er/or' that needs to be implemented by specific hardware.

Various elements and regions in the drawings are schematically illustrated. Therefore, the spirit of the disclosure is not limited by relatively sizes or intervals illustrated in the accompanying drawings.

Hereinafter, embodiments of the disclosure will be described in detail with reference to the accompanying drawings so that those skilled in the art to which the disclosure pertains may easily practice the disclosure.

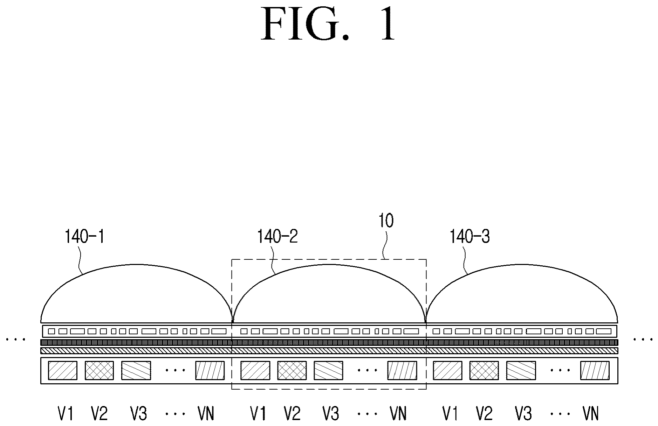

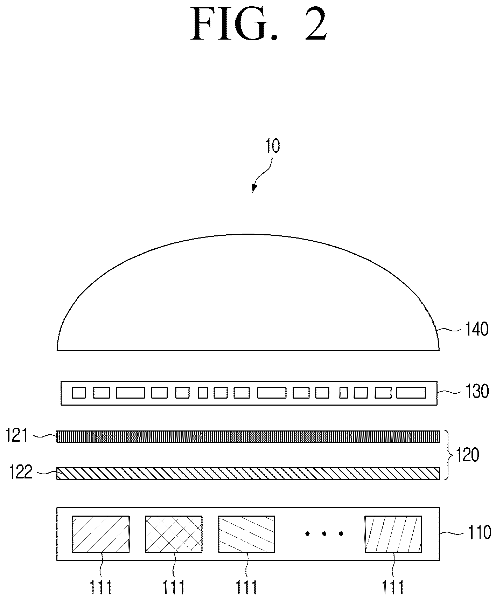

FIG. 1 is a diagram illustrating a display module 100 according to one or more embodiments of the present disclosure, and FIG. 2 is an enlarged view of a portion of the display module 100 according to one or more embodiments of the present disclosure.

FIG. 2 enlarges a portion 10 of FIG. 1 and illustrates components separated from each other for clear expression. Hereinafter, the description will be made with reference to FIGS. 1 and 2 together.

The 'display module 100' according to the present disclosure refers to a device (or configuration) capable of displaying images, and may be replaced with terms such as a 'display panel'. In particular, the display module 100 is a device that may provide both three-dimensional (3D) and two-dimensional (2D) images without auxiliary equipment such as 3D glasses, and may be referred to as a 2D/3D switching (or switchable) display, a display for 2D/3D image compatibility, etc.

The display module 100 may refer to the entire display capable of displaying images, or may refer to a portion of the entire display. That is, the plurality of display modules 100 may be coupled to each other to configure one display.

An 'electronic device 1000' to which the display module 100 according to the present disclosure is applied refers to a device that may include the display module 100. For example, the electronic device 1000 may be implemented as a TV, a smart phone, a tablet PC, a smartwatch, a virtual reality (VR) device, an augmented reality (AR) device, etc. However, there are no special restrictions on the type of electronic device 1000.

Hereinafter, the display module 100 will first be described, and then the electronic device 1000 including the display module 100 will be described.

As illustrated in FIGS. 1 and 2, the display module 100 may include a light emitting unit (or light emitter)110, a polarization adjustment unit (or polarization adjuster) 120, a geometric phase lens 130, and a lenticular lens 140.

The light emitting unit 110 may emit light corresponding to image data. Here, the term 'emit' may be replaced with the term 'radiate', etc. The light emitting unit 110 may include a plurality of pixels 111 and light sources corresponding to the plurality of pixels 111. In addition, in a broad sense, the light emitting unit 110 may include a circuit and an electrode for controlling the driving of the light source. For example, the light source of the light emitting unit 110 may be implemented as a plurality of light-emitting diodes (LEDs), but is not limited thereto. The term 'light emitting unit 110' may be replaced with terms such as 'image display unit', 'display panel', or 'light output unit'.

When a request to provide an image is received, the light emitting unit 110 may emit light corresponding to the image data through the plurality of pixels 111. Here, the 'request to provide an image' may be received based on a user input, received from an external device, or received based on the occurrence of an event predefined as requiring the provision of the image.

For example, the request to provide an image may be received based on a user's touch input for selecting an image to be played, a control signal received from a remote control device, etc. In addition, the request to provide an image may be received based on events occurring in the electronic device 1000, such as turning on the electronic device 1000 including the display module 100 and unlocking the electronic device 1000.

The 'receive' of the request to provide an image may be replaced with terms such as 'acquire or obtain', 'identify', 'recognize', and 'detect' of the request to provide an image.

As will be described later, the request to provide an image may be a request to provide an image in three dimensions or a request to provide an image in two dimensions.

The polarization adjustment unit 120 may adjust a polarization of incident light. In the present disclosure, the term 'adjust' may be replaced with terms such as transform, change or alter, or modulate. The polarization adjustment unit 120 may adjust the polarization of the incident light to a first polarization or a second polarization different from the first polarization, based on the request to provide an image in three dimensions or two dimensions. That is, the polarization adjustment unit 120 may adjust the polarization of the incident light to right circularly polarized (RCP) or left circularly polarized (LCP).

In the present disclosure, the 'first polarization' is used as a term to refer to one of the right circularly polarized and the left circularly polarized, and the 'second polarization' is used as a term to refer to the other one of the right circularly polarized and the left circularly polarized that is different from the first polarization. The 'right circularly polarized' refers to polarization that rotates clockwise based on a traveling direction of light, and the 'left circularly polarized' refers to polarization that rotates counterclockwise based on the traveling direction of light. That is, the first polarization may be the right circularly polarized and the second polarization may be the left circularly polarized, or conversely, the first polarization may be the left circularly polarized and the second polarization may be the right circularly polarized, which may change depending on the settings of the developer or user.

In one or more embodiments, when the request to provide an image is the request to provide an image in three dimensions, the polarization adjustment unit 120 may adjust the polarization of lights incident from the light emitting unit 110 to the first polarization. On the other hand, when the request to provide an image is the request to provide an image in two dimensions, the polarization of lights incident from the light emitting unit 110 may be adjusted to the second polarization.

For example, the polarization adjustment unit 120 may adjust the polarization of the incident light to the right circularly polarized when the display module 100 provides the 3D image, and to the left circularly polarized when the display module 100 provides the 2D image. Conversely, the polarization adjustment unit 120 may adjust the polarization of the incident light to the left circularly polarized when the display module 100 provides the 3D image, and to the right circularly polarized when the display module 100 provides the 2D image.

When the display module 100 provides the 3D image and the 2D image (may be referred to as '3D mode' and '2D mode', respectively), whether the polarization adjustment unit 120 adjusts the polarization of light to what type of polarization may change depending on the developer or user's settings.

The polarization adjustment unit 120 may include a linear polarizer 122 and an active quarter-wave plate (active QWP) 121. The linear polarizer 122 may adjust (transform, alter, or modulate) light into linear polarization by selectively allowing or blocking the traveling direction of light vibrating in a specific direction. In particular, in the present disclosure, the linear polarizer 122 may adjust the polarization of lights emitted through each of the plurality of pixels 111 to a linear form.

The active QWP 121 may adjust (transform, alter, or modulate) the traveling direction and polarized state of light. The active QWP may dynamically adjust the polarization of the incident light at quarter wavelength (1/4 wavelength) intervals based on external input such as an external voltage or electrical signal. In particular, in the present disclosure, the active QWP 121 may transform the lights incident through the linear polarizer 122 into the right circularly polarized or left circularly polarized. The term 'active QWP 121' may also be referred to as 'Dynamically adjustable quarter-wave plate'.

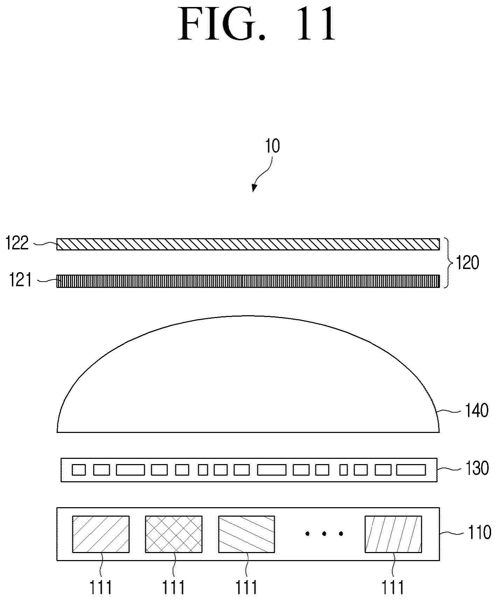

The polarization adjustment unit 120 may be arranged between the light emitting unit 110 and the geometric phase lens 130, as illustrated in FIGS. 1 and 2. However, the polarization adjustment unit 120 may be arranged over the lenticular lens 140. Various embodiments depending on the position of the polarization adjustment unit 120 will be described in detail with reference to FIGS. 11 to 13.

The geometric phase lens 130 refers to a lens that may refract light by adjusting a phase of incident light. In particular, the geometric phase lens 130 may exhibit different optical characteristics depending on the polarization of light. As illustrated in FIGS. 1 to 5, the geometric phase lens 130 is implemented in a flat shape, unlike a typical convex lens or concave lens, and may therefore be referred to as a 'phase plate'. In addition, in addition to the geometric phase lens 130, any lens that may operate as the convex lens or concave lens depending on the polarization of the incident light may be used in place of the geometric phase lens 130, and the geometric phase lens 130 may be simply referred to as a 'first lens'.

The geometric phase lens 130 may include a surface with a specific pattern or structure. When light passes through the geometric phase lens 130, the phase of light changes due to diffraction according to a specific pattern or structure, and wave characteristics of light may change accordingly. In addition, specific optical effects may appear when light passing through the geometric phase lens 130 interacts with other materials or passes through another lens (e.g., lenticular lens 140). These optical effects may be used to perform desired operations in an optical system by focusing light in a specific direction or controlling the phase structure of light.

In the present disclosure, the geometric phase lens 130 may operate as the convex lens or concave lens depending on the polarization of the incident light. That is, the geometric phase lens 130 may perform the function of the convex lens or concave lens depending on whether the polarization of the incident light is the left circularly polarized or the right circularly polarized. When the polarization of lights incident from the polarization adjustment unit 120 is the first polarization among the right circularly polarized and the left circularly polarized, the geometric phase lens 130 may operate as either the convex lens or the concave lens. On the other hand, when the polarization of lights incident from the polarization adjustment unit 120 is a second polarization different from the first polarization among the right circularly polarized and the left circularly polarized, the geometric phase lens 130 may operate as a lens different from the first polarization among the convex lens or the concave lens.

As described above, the first polarization may be the right circularly polarized and the second polarization may be the left circularly polarized, or conversely, the first polarization may be the left circularly polarized and the second polarization may be the right circularly polarized. Also, when the incident light is the first polarization, the geometric phase lens 130 operates as any of the convex lens or the concave lens, and when the incident light is the second polarization, whether the geometric phase lens 130 operates as any of the convex lens or the concave lens may change depending on the settings of the developer or user. In other words, when the incident light is the right circularly polarized, the geometric phase lens 130 may operate as the convex lens, and when the incident light is the left circularly polarized, the geometric phase lens 130 may operate as the concave lens, and when the incident light is the right circularly polarized, the geometric phase lens 130 may operate as the concave lens, and when the incident light is the left circularly polarized, the geometric phase lens 130 may operate as the convex lens.

The 'convex lens' is a lens with a curved surface that goes from the center to the outside. Light passing through the center of the convex lens may be refracted by the curved surface of the lens and focused on the focus of the lens. The 'concave lens' is a lens with a curved surface that goes from the center to the inside. Light passing through the center of the concave lens may be refracted by the curved surface of the lens and spread out. The convex lens may be used to enlarge an image, and the concave lens may be used to reduce an image.

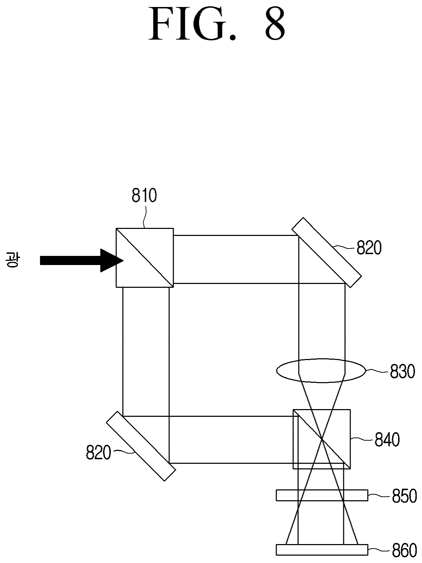

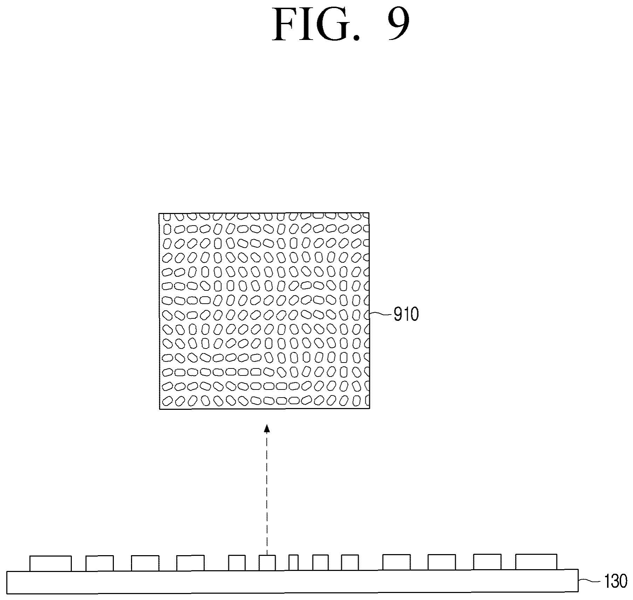

The size, spacing, shape, etc., of the pattern or structure of the geometric phase lens 130 may be parameters that control the phase change of light. A method of forming a pattern or structure on the geometric phase lens 130 will be described later with reference to FIGS. 8 and 9.

The lenticular lens 140 refers to a lens that may provide a 3D effect through the arrangement of a plurality of sub-lenses (or micro-lenses). In particular, the lenticular lens 140 may output the light incident from the geometric phase lens 130 in a preset direction. That is, the light incident from the geometric phase lens 130 may be refracted in the preset direction inside the lenticular lens 140 or may transmit the inside of the lenticular lens 140 and may be emitted to the outside of the lenticular lens 140.

The lenticular lens 140 may have the shape of the convex lens as illustrated in FIGS. 1 to 5. In addition, the lenticular lens 140 may include the plurality of sub-lenses, and the plurality of sub-lenses may be arranged on the substrate at regular intervals. Accordingly, the lenticular lens 140 may be referred to as a 'lenticular lens array 140.' In addition, any lens that may provide a 3D effect other than the lenticular lens 140 may be used in place of the lenticular lens 140, and the lenticular lens 140 may be simply referred to as a 'second lens'.

FIG. 1 illustrates three sub-lenses among the plurality of sub-lenses included in the lenticular lens 140: a first sub-lens 140-1, a second sub-lens 140-2, and a third sub-lens 140-3. However, for convenience of description, only the three sub-lenses are illustrated, and there is no particular limitation on the number of sub-lenses. In other drawings, only one sub-lens is illustrated for convenience of illustration.

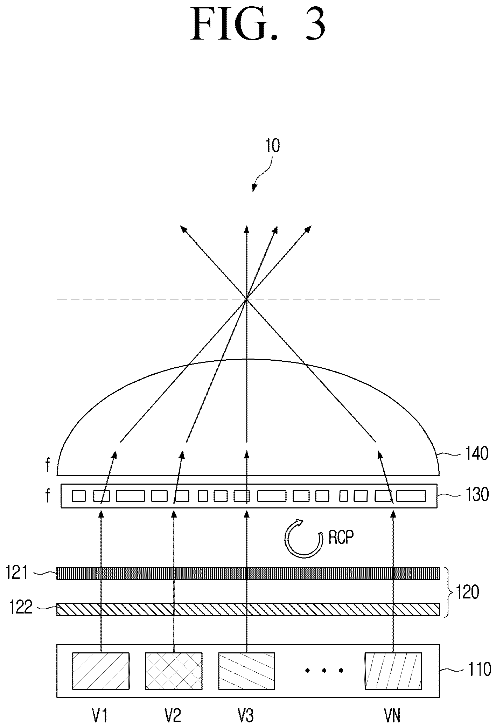

In the above, each component of the display module 100 has been described. Hereinafter, with reference to FIGS. 3 to 5, the process of providing, by the display module 100, the 3D image and providing the 2D image will be described in detail.

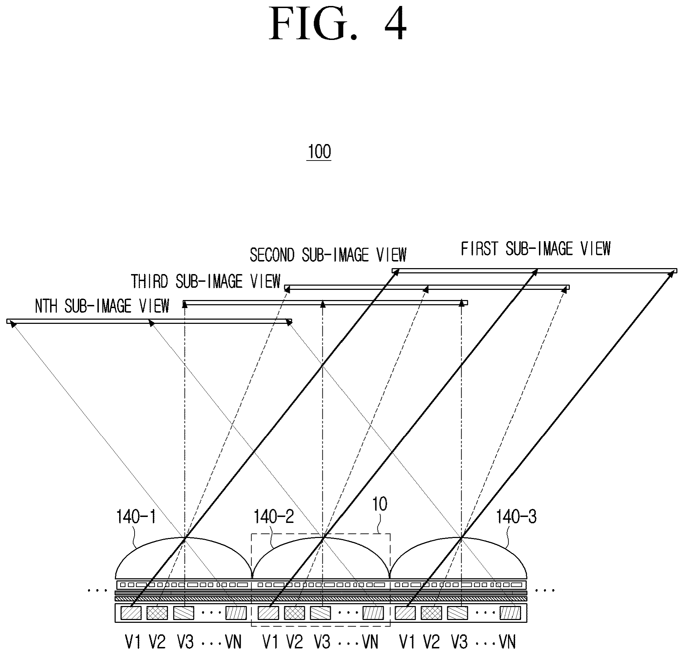

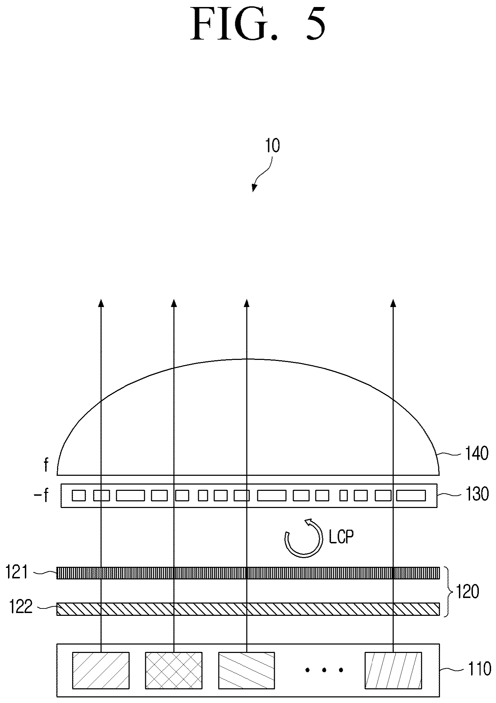

FIG. 3 is a diagram illustrating a process in which the display module 100 according to one or more embodiments of the present disclosure provides the 3D image, FIG. 4 is a diagram for describing a method of mapping directions of each light emitted through the plurality of pixels 111, respectively, when providing the 3D image, and FIG. 5 is a diagram for describing a process in which the display module 100 according to one or more embodiments of the present disclosure provides the 2D image.

The arrows in FIGS. 3 to 5 represent 'ray' indicating a traveling path of light. In the description of the present disclosure, the term 'light' may be used as a meaning to include light rays in a broad sense.

As illustrated in FIG. 3, when the light emitted from the light emitting unit 110 is adjusted to the first polarization through the polarization adjustment unit 120, the geometric phase lens 130 may operate as the convex lens. In addition, the light incident from the geometric phase lens 130 operating as the convex lens to the lenticular lens 140 may be refracted by the lenticular lens 140 and output in a first direction to provide the 3D image.

When the request to provide a 3D image is received, the light emitting unit 110 may emit light corresponding to the image data through the plurality of pixels 111. In addition, the request to provide a 3D image may be transmitted to the polarization adjustment unit 120 together with the light emitting unit 110. That is, information (or signal) on whether the request to provide an image is a request to provide a 3D image or a request to provide a 2D image may be transmitted in synchronization with both the light emitting unit 110 and the polarization adjustment unit 120.

When the light emitted through the plurality of pixels 111 is incident on the polarization adjustment unit 120 after the request to provide a 3D image is received, the polarization adjustment unit 120 may adjust the polarization of the incident light to a preset polarization corresponding to the 3D image among the right circularly polarized and the left-circular polarized.

For example, when the light emitted through the plurality of pixels 111 is incident on the polarization adjustment unit 120 after the request to provide a 3D image is received, the polarization adjustment unit 120 may adjust the polarization of the incident light to the right-circularly polarized (right circularly polarized in FIG. 3). In the examples of FIGS. 3 to 5, the polarization corresponding to the 3D image is set to the right circularly polarized (RCP), and the polarization corresponding to the 2D image is set to the left circularly polarized (LCP), but it may be set in the opposite direction.

When the lights adjusted to the right circularly polarized through the polarization adjustment unit 120 are incident on the geometric phase lens 130, the polarization of lights is adjusted to the left circularly polarized, and the geometric phase lens 130 may operate as the convex lens. Then, when the lights emitted through the geometric phase lens 130 operating as the convex lens are incident on the lenticular lens 140, the lenticular lens 140 may refract paths of lights incident through the geometric phase lens 130, respectively, in the first direction so that the display module 100 provides the 3D image.

Here, the 'first direction' may be a direction for mapping directions of each light emitted through each of the plurality of pixels 111 to one of the plurality of views for providing the 3D image. A method of mapping directions of each light emitted through each of the plurality of pixels 111 will be described with reference to FIG. 4.

Similar to FIG. 1, FIG. 4 illustrates three sub-lenses among the plurality of sub-lenses included in the lenticular lens 140: a first sub-lens 140-1, a second sub-lens 140-2, and a third sub-lens 140-3. In addition, in FIG. 4, the plurality of pixels 111 corresponding to each of the three sub-lenses are represented as V1, V2, V3, and VN according to their relative positions. That is, pixel V1, pixel V2, pixel V3, and pixel VN corresponding to the first sub-lens 140-1 are the pixel V1, the pixel V2, the pixel V3, and the pixel VN corresponding to the second sub-lens 140-2, and also corresponds to the pixel V1, the pixel V2, the pixel V3, and the pixel VN corresponding to the third sub-lens 140-3. For convenience of description, pixels between the pixel V3 and the pixel VN are omitted, and there is no special limitation on the number of pixels corresponding to each sub-lens.

For example, the light emitted through the pixel V1 corresponding to the first sub-lens 140-1 may be refracted while passing through the first sub-lens 140-1, as indicated by the arrow in FIG. 4, and output in the direction of the view indicated as a first sub-image view in FIG. 4. In addition, the light emitted through the pixel V1 corresponding to the second sub-lens 140-2 and the light emitted through the pixel V1 corresponding to the third sub-lens 140-3 may also be output in the direction corresponding to the first sub-image view.

Likewise, the light emitted through the pixel V2 corresponding to the first sub-lens 140-1, the pixel V2 corresponding to the second sub-lens 140-2, and the pixel V2 corresponding to the third sub-lens 140-3 may be output in a direction corresponding to a second sub-image view, the light emitted through the pixel V3 corresponding to the first sub-lens 140-1, the pixel V3 corresponding to the second sub-lens 140-2, and the pixel V3 corresponding to the third lens may be output in a direction corresponding to a third sub-image view, and the light emitted through the pixel VN corresponding to the first sub-lens 140-1, the pixel VN corresponding to the second sub-lens 140-2, and the pixel VN corresponding to the third sub-lens 140-3 may be output in a direction corresponding to an Nth sub-image view.

Each of the first sub-image view, the second sub-image view, the third sub-image view, and the Nth sub-image view may represent different images. In other words, when light with different directional components is emitted through the lenticular lens 140 according to the relative position of each pixel, different images may be provided according to each view, like the sub-image views of FIG. 1. Accordingly, the 3D effect may be provided. The 'sub-image view' refers to each of different images illustrated depending on the user's view, and may be replaced with terms such as 'image slice'.

When the lights emitted through the geometric phase lens 130 operating as the convex lens are incident on the lenticular lens 140, the optical powers of the geometric phase lens 130 and the lenticular lens 140 operating as the convex lens may be added. In the present disclosure, the term 'optical power' refers to a physical measure representing refractive power of an optical lens or optical system. The greater the optical power, the stronger the refractive ability of the optical lens or optical system, and the focal length is inversely proportional to the optical power. Here, the 'focal length' refers to the distance to the center of the lens when the image is gathered at one point on an optical axis of the lens. The shorter the focal length, the wider the viewing angle.

When the optical powers of the geometric phase lens 130 and the lenticular lens 140 operating as the convex lenses are added, if a first focal length of the geometric phase lens 130 and a second focal length of the lenticular lens 140 are the same, a third focal length of light passing through both the geometric phase lens 130 and the lenticular lens 140 may be half of the first focal length and the second focal length. In other words, when the geometric phase lens 130 operates as the convex lens, the focal lengths of light passing through both the geometric phase lens 130 and the lenticular lens 140 may be reduced compared to each of the focal lengths of the geometric phase lens 130 and the lenticular lens 140.

As a result, when the geometric phase lens 130 operates as the convex lens, the focal length of the optical system including the geometric phase lens 130 and the lenticular lens 140 is reduced, so it is possible to provide a 3D image with a wider viewing angle compared to the case of providing the 3D image using only the lenticular lens 140.

In the above, the case where the geometric phase lens 130 operates as the convex lens has been described, and the case where the geometric phase lens 130 operates as the concave lens will now be described. As illustrated in FIG. 5, when the light emitted from the light emitting unit 110 is adjusted to the second polarization through the polarization adjustment unit 120, the geometric phase lens 130 may operate as the convex lens. In addition, the light incident from the geometric phase lens 130 operating as the concave lens to the lenticular lens 140 may transmit the lenticular lens 140 and may be output in a second direction to provide the 2D image.

When the request to provide a 2D image is received, the light emitting unit 110 may emit light corresponding to the image data through the plurality of pixels 111. In addition, when the light emitted through the plurality of pixels 111 is incident on the polarization adjustment unit 120 after the request to provide a 3D image is received, the polarization adjustment unit 120 may adjust the polarization of the incident light to the left circularly polarized (left circularly polarized in FIG. 5).

When the lights adjusted to the left circularly polarized through the polarization adjustment unit 120 are incident on the geometric phase lens 130, the polarization of lights is adjusted to the right circularly polarized, and the geometric phase lens 130 may operate as the concave lens. Then, when the lights emitted through the geometric phase lens 130 operating as the concave lens are incident on the lenticular lens 140, the lenticular lens 140 may transmit the lights incident through the geometric phase lens 130 so that the display module 100 provides the 2D image. Here, 'transmitting' the lights incident from the geometric phase lens 130 may refer to that the lights incident through the geometric phase lens 130 are output without being refracted. Here, the direction in which the lights incident from the geometric phase lens 130 transmit the lenticular lens 140 and are output may be distinguished from the 'first direction' and may be referred to as the 'second direction'. That is, the second direction for providing the 2D image may be different from the first direction for providing the 3D image.

As a result, when the geometric phase lens 130 also operates as the concave lens, the optical powers of the geometric phase lens 130 and the lenticular lens 140 are canceled out, and thus, the lights incident on the geometric phase lens 130 and the lenticular lens 140 are output without being refracted, thereby providing the 2D image.

According to the embodiments described above, the display module 100 couples the lenticular lens 140 for implementing the 3D image to the geometric phase lens 130 having different optical characteristics depending on the polarization of light, thereby implementing the 2D/3D switching display.

In particular, the display module 100 includes an optical system in which the lenticular lens 140 and the geometric phase lens 130 are coupled, and therefore, has a shorter focal distance compared to the case of providing the 3D image using only the lenticular lens 140, so it is possible to provide the 3D image with a significantly wider viewing angle. In addition, since the geometric phase lens 130 may be implemented as a very thin flat lens, the geometric phase lens 130 is easily coupled to the lenticular lens 140 and does not cause a significant change in the overall form factor.

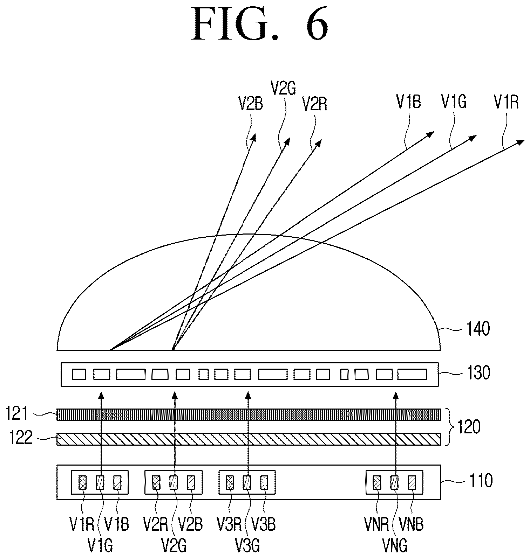

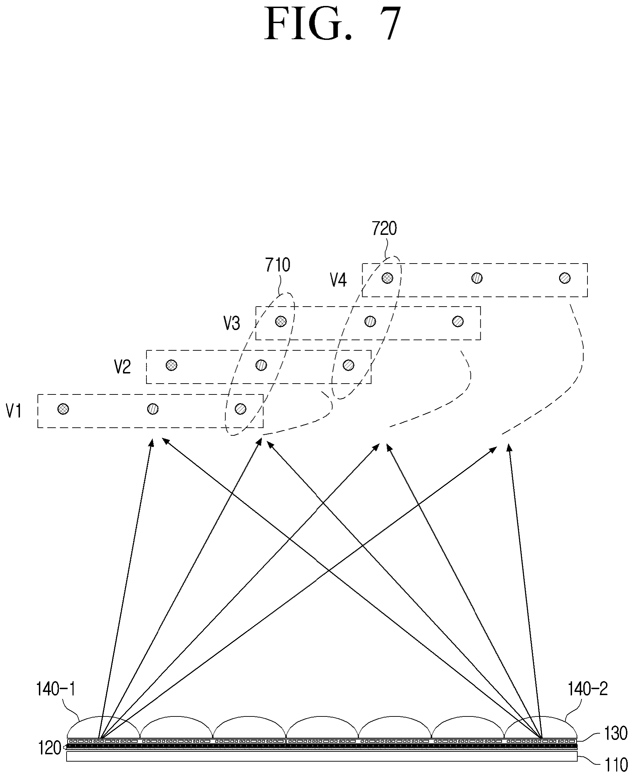

FIG. 6 is a diagram for describing chromatic aberration that may occur due to the geometric phase lens 130 and a sub-pixel according to the present disclosure and FIG. 7 is a diagram for describing one or more embodiments for eliminating a view separation phenomenon due to the chromatic aberration of the geometric phase lens 130.

In the above, light corresponding to the image data is emitted through the plurality of pixels 111 included in the light emitting unit 110. Each of the plurality of pixels 111 may include a plurality of sub-pixels. When each of the plurality of pixels 111 includes the plurality of sub-pixels, the light emitting unit 110 may emit light corresponding to the image data through each of the plurality of sub-pixels. Each of the plurality of sub-pixels may correspond to a plurality of LEDs, but is not limited thereto.

For example, as illustrated in FIG. 6, the plurality of sub-pixels may include first sub-pixels (V1R, V2R, V3R, VNR) that emit red light, and second sub-pixels (V1G, V2G, V3G, VNG) that emit green light, and third sub-pixels (V1B, V2B, V3B, VNB) that emit blue light, and a set of the first sub-pixel, the second sub-pixel, and the third sub-pixel may constitute each of the plurality of pixels 111. The first sub-pixel, second sub-pixel, and third sub-pixel may be replaced with terms such as R sub-pixel, G sub-pixel, and B sub-pixel, respectively.

As described above, the geometric phase lens 130 is a lens that may refract light by adjusting the phase of the incident light. When light passes through the geometric phase lens 130, the phase of light changes due to diffraction according to a specific pattern or structure, and the wave characteristics of light may change accordingly. As such, since the geometric phase lens 130 is a device manufactured based on diffractive optics, the chromatic aberration is severe.

When light passes through the geometric phase lens 130, since light with different wavelengths experiences different phase changes, a propagation direction of light occurs depending on each wavelength, and the chromatic aberration may occur accordingly. In addition, the chromatic aberration may cause the view separation phenomenon when providing the 3D image.

For example, as illustrated in FIG. 6, sub-pixel V1R, sub-pixel V1G, and sub-pixel V1B are sub-pixels that constitute one pixel, but light emitted through the sub-pixel V1R, the sub-pixel V1G, and the sub-pixel V1B, respectively, may pass through the geometric phase lens 130 and the lenticular lens 140, and thus output from different views. In addition, as illustrated in FIG. 6, sub-pixel V2R, sub-pixel V2G, and sub-pixel V2B are sub-pixels that constitute one pixel, but light emitted through the sub-pixel V2R, the sub-pixel V2G, and the sub-pixel V2B, respectively, may pass through the geometric phase lens 130 and the lenticular lens 140, and thus output from different views. In FIG. 6, paths of the light output through the sub-pixel V1R, the sub-pixel V1G, the sub-pixel V1B, the sub-pixel V1R, the sub-pixel V1G, and the sub-pixel V1B are indicated by arrows, and are given the same symbols as the sub-pixels.

As illustrated in FIG. 6, when the light emitted through each sub-pixel is output in different directions as it passes through the geometric phase lens 130 and the lenticular lens 140, the view separation phenomenon as illustrated in FIG. 7 may appear. For example, as illustrated in FIG. 7, the lights passing through the first sub-lens 140-1 and the lights passing through the second sub-lens 140-2 included in the lenticular lens 140 may be output in the directions corresponding to the first sub-image view V1, the second sub-image view V2, the third sub-image view V3, and the fourth sub-image view V4.

However, when each of the plurality of pixels 111 includes the first sub-pixel, the second sub-pixel, and the third sub-pixel, as indicated by different circles within each sub-image view of FIG. 7, light emitted through each sub-pixel may be output at different views within each sub-image view. That is, when all the lights emitted through each of the first sub-pixel, the second sub-pixel, and the third sub-pixel included in one pixel are output in the direction corresponding to the same sub-image view, the view separation phenomenon may appear within the sub-image view.

For example, in FIG. 7, three different circles in the first sub-image view V1 represent the results that the lights emitted through each of the first sub-pixel, second sub-pixel, and third sub-pixel included in one pixel are output in directions from different views, and three different circles included in each of the second sub-image view V2, the third sub-image view V3, and the fourth sub-image view V4 also represent the results that the lights emitted through each of the first sub-pixel, second sub-pixel, and third sub-pixel included in one pixel is output in directions from different views.

Hereinafter, one or more embodiments for solving the view separation phenomenon described above will be described. In the description of FIG. 4, a method of mapping directions of light 'in units of each pixel' to provide the 3D image was described above. However, according to one or more embodiments described below, in order to compensate (correct or correct) the chromatic aberration of the phase lens 130 while providing the 3D image, the directions of light to provide the 3D image 'in units of each sub-pixel' may be mapped.

By mapping the directions of each light emitted through each of the plurality of sub-pixels to one of the plurality of views for providing the 3D image, the chromatic aberration of the geometric phase lens 130 may be compensated. In other words, when the paths of lights incident through the geometric phase lens 130 by the lenticular lens 140 are each refracted in a preset direction (or first direction), the 'preset direction' may be a direction for mapping the directions of each light emitted through each of the plurality of sub-pixels to one of the plurality of views that compensate for the chromatic aberration of the geometric phase lens 130 while providing the 3D image.

For example, it may be seen that lights emitted through sub-pixels (R, G, and B pixels, respectively) corresponding to three circles included in an area 710 of FIG. 7 are mapped to the same or adjacent views, and similarly, lights emitted through sub-pixels (R, G, and B pixels, respectively) corresponding to three circles included in an area 720 of FIG. 7 are also mapped to the same or adjacent views. As illustrated in FIG. 7, by identifying a set of sub-pixels mapped at the same or adjacent views on the premise that the directions of light to provide the 3D image are mapped in units of each pixel without considering the sub-pixels, it is possible to set the directions of light to provide the 3D image in units of each sub-pixel.

FIGS. 6 and 7 are merely examples, and which sub-pixel is mapped at which view may be determined differently according to the characteristics of the components included in the display module 100.

According to one or more embodiments described above with reference to FIGS. 6 and 7, by mapping the directions of light for providing the 3D image in units of each sub-pixel included in each of the plurality of pixels 111, it is possible to compensate for the chromatic aberration of the geometric phase lens 130 and thus eliminate the view separation phenomenon by color when outputting the 3D image.

FIG. 8 is a diagram for describing a method of manufacturing a geometric phase lens 130 using liquid crystal, and FIG. 9 is a diagram for describing a method of manufacturing a geometric phase lens 130 using meta atoms.

Referring to FIG. 8, the geometric phase lens 130 may be manufactured based on liquid crystal using a polarization interferometer.

Light emitted through a light source may be incident on a polarizing beam splitter 810. When the light is incident on the polarizing beam splitter 810, the polarizing beam splitter 810 may separate a path of light by reflecting light of a specific polarization and transmitting light of another polarization. The lights passing through the polarizing beam splitter 810 may change their path through a reflector 820. In addition, one of the lights separated through the polarizing beam splitter 810 passes through the lens 830 with the target focal length (i.e., the focal length of the geometric phase lens 130) and is incident on the polarizing interferometer 840, and another one of the separated lights may be incident on the polarization interferometer 840 without passing through the lens.

When the lights are incident on the polarization interferometer 840 and then pass through the active QWPs 121 and 850, an interference pattern formed according to the phase difference of the lights may be formed on a substrate 860. Here, the substrate 860 includes a medium capable of forming the interference pattern, and may be configured so that an area where the interference pattern is formed may be dug in response to light. Thereafter, by depositing the liquid crystal on the substrate 860, the geometric phase lens 130 having the interference pattern may be formed.

According to the manufacturing method described with reference to FIG. 8, the geometric phase lens 130 may be manufactured relatively more easily and at a lower cost than the manufacturing method of FIG. 9 described later.

Referring to FIG. 9, the geometric phase lens 130 may be manufactured using the meta atoms. An upper picture 910 of FIG. 9 is an enlarged view of one area of the geometric phase lens 130 illustrated at a lower portion, and illustrates that a number of meta atoms are formed.

The meta atom refers to a microscopic unit of a material with special optical, electrical, or magnetic properties. The properties of the meta atoms may be determined depending on the geometric pattern with the structure of the meta atoms, the arrangement and combination of materials, and the optical properties of the materials. In particular, various optical devices may be formed by combining meta atoms with specific patterns and structures.

The meta-atom-based geometric phase lens 130 may be formed by calculating the structure, distribution, etc., of meta atoms corresponding to the characteristics of the geometric phase lens 130 to be implemented and then patterning the meta atoms using lithography, nanofabrication, etc.

According to the manufacturing method described with reference to FIG. 9, unlike the aberration of the lens used in the manufacturing method of FIG. 8, which also exists in the geometric phase lens 130, the geometric phase lens 130 may be manufactured by freely implementing a phase profile.

In particular, the lenticular lens 140 has optical aberration due to refraction, and when manufacturing the geometric phase lens 130 using the meta atoms, the geometric phase lens 130 may also be manufactured by adding the phase profile that may compensate for the optical aberration of the lenticular lens 140. In other words, when the geometric phase lens 130 is manufactured using the meta atoms, an additional function of compensating for the optical aberration of the lenticular lens 140 may be performed by utilizing the optical characteristics of the geometric phase lens 130.

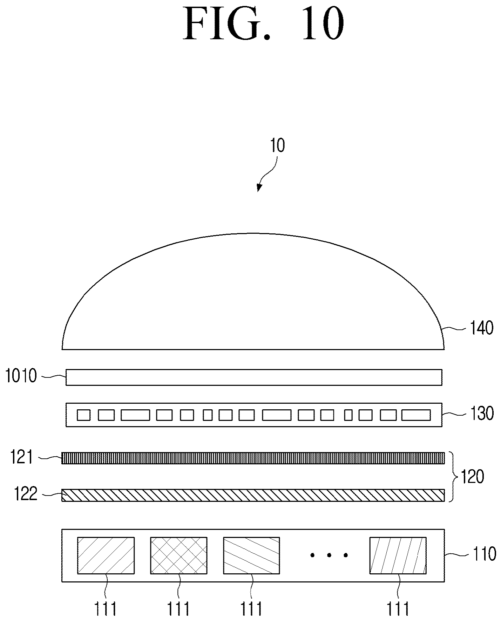

FIG. 10 is a diagram for describing one or more embodiments in which the display module 100 includes a gradient-index (GRIN) lens 1010.

As described above, the geometric phase lens 130 has large chromatic aberration because it is a device manufactured based on diffractive optics. In addition, the chromatic aberration of the geometric phase lens 130 shows an opposite tendency to that of a general refractive lens including the gradient-index (GRIN) lens. Therefore, it is difficult to compensate for the chromatic aberration of the geometric phase lens 130 using a general refractive lens, but the chromatic aberration of the geometric phase lens 130 may be compensated by using the aberration characteristics of the GRIN lens 1010.

The GRIN lens 1010 refers to a lens whose refractive index has the characteristics spatially changing. The GRIN lens 1010 has a distribution in which the refractive index gradually changes along a central axis, and thus, the path of incident light may change depending on the position. For example, the GRIN lens 1010 may refract light at a larger angle at a position with a high refractive index, and refract light at a smaller angle at a position with a low refractive index. In addition to the GRIN lens 1010, any lens that may spatially change the refractive index of the lens may be applied to the present disclosure.

According to one or more embodiments, the display module 100 according to the present disclosure may further include the GRIN lens 1010 as well as the light emitting unit 110, the polarization adjustment unit 120, the geometric phase lens 130, and the lenticular lens 140. In addition, the GRIN lens 1010 may have different refractive indices depending on the position within the lens. Here, different refractive indexes depending on the position within the lens may be set to compensate for the chromatic aberration of the geometric phase lens 130.

For example, as illustrated in FIG. 10, the GRIN lens 1010 and the lenticular lens 140 manufactured to compensate for the chromatic aberration of the geometric phase lens 130 may be arranged in the display module 100 in a stacked structure. FIG. 10 illustrates a case where the GRIN lens 1010 is arranged between the lenticular lens 140 and the geometric phase lens 130, but there is no particular limitation on the position where the GRIN lens 1010 is arranged. In addition, the lenticular lens 140, that is, the sub-lenses included in the lenticular array, may also be formed based on the GRIN lens 1010.

According to one or more embodiments described above with reference to FIG. 10, even without using the mapping method in units of sub-pixels described with reference to FIGS. 6 and 7, it is possible to eliminate the view separation phenomenon caused by the chromatic aberration of the geometric phase lens 130 by using the GRIN lens 1010.

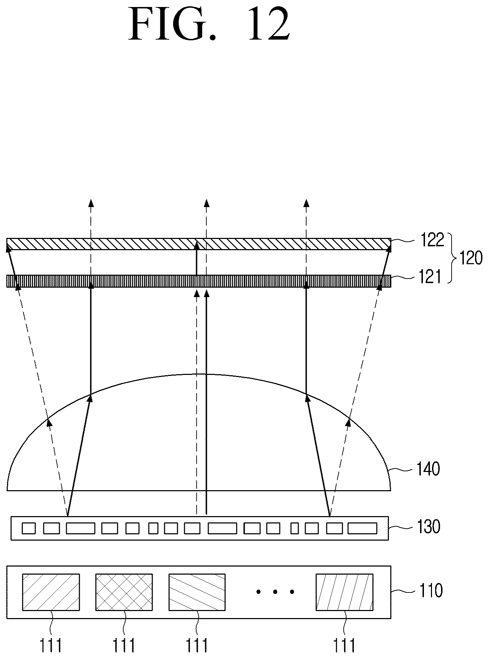

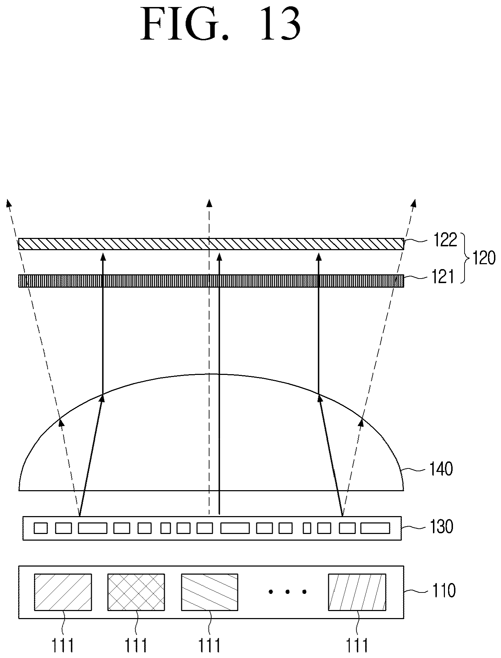

FIG. 11 is a diagram for describing one or more embodiments in which a polarization adjustment unit 120 is arranged over the geometric phase lens 130 and the lenticular lens 140, FIG. 12 is a diagram for describing a process of providing the 2D image when the polarization adjustment unit 120 is arranged over the geometric phase lens 130 and the lenticular lens 140, and FIG. 13 is a diagram for describing a process of providing the 3D image when the polarization adjustment unit 120 is arranged over the geometric phase lens 130 and the lenticular lens 140.

In the above, various embodiments have been described such that the polarization adjustment unit 120 is arranged between the light emitting unit 110 and the geometric phase lens 130. However, according to one or more embodiments, the polarization adjustment unit 120 may be arranged over the geometric phase lens 130 and the lenticular lens 140.

As illustrated in FIG. 11, in the display module 100, the light emitting unit 110, the geometric phase lens 130 over the light emitting unit 110, and the lenticular lens 140 over the geometric phase lens 130 may be sequentially arranged, and the active QWP 121 of the polarization adjustment unit 120 over the lenticular lens 140 and the linear polarizer 122 over the active QWP 121 may be sequentially arranged.

When the polarization adjustment unit 120 is arranged over the geometric phase lens 130 and the lenticular lens 140, the display module 100 may provide the 3D image or 2D image by controlling the activation state (or operation state) of the active QWP of the polarization adjustment unit 120.

As illustrated in FIGS. 12 and 13, when the polarization adjustment unit 120 is arranged over the geometric phase lens 130 and the lenticular lens 140, the light emitted through the light emitting unit 110 is incident on the geometric phase lens 130 and the lenticular lens 140 without passing through the polarization adjustment unit 120.

That is, since the polarization of light incident on the geometric phase lens 130 and the lenticular lens 140 is not adjusted to either the right circularly polarized or the left circularly polarized, the lights that pass through the geometric phase lens 130 and the lenticular lens 140 and are incident on the polarization adjustment unit 120 may include lights (indicated by dotted arrows in FIGS. 12 and 13) refracted in the preset direction for the 3D image and lights (indicated by solid arrows in FIGS. 12 and 13) transmitted in a straight direction for the 2D image.

Hereinafter, for convenience of description, it is assumed that the polarization of lights emitted from the light emitting unit 110 for the 3D image is the right circularly polarized, and the polarization of lights emitted from the light emitting unit 110 for the 2D image is the left circularly polarized. That is, the polarization of lights (dotted arrow) refracted in a preset direction for the 3D image is the right circularly polarized, and the polarization of lights (solid arrow) transmitted in a straight direction for the 2D image is the left circularly polarized. However, the polarization of lights emitted from the light emitting unit 110 for the 3D image is the left circularly polarized, and the polarization of lights emitted from the light emitting unit 110 for the 2D image is the right circularly polarized.

When the request to provide a 2D image is received, the active QWP 121 may be activated. Accordingly, the active QWP 121 may adjust the polarization of lights emitted through the geometric phase lens 130 and the lenticular lens 140 to the opposite polarization. For example, as illustrated in FIG. 12, the polarization of light transmitted in the straight direction (solid arrow) for the 2D image may be adjusted from the left circularly polarized to the right circularly polarized, and the polarization of lights (dotted arrow) refracted in the preset direction for the 3D image may be adjusted from the right circularly polarized to the left circularly polarized.

When the request to provide a 3D image is received, the active QWP 121 may not be activated. Accordingly, the active QWP 121 may not adjust the polarization of lights emitted through the geometric phase lens 130 and the lenticular lens 140. For example, as illustrated in FIG. 13, the polarization of lights (solid arrow) transmitted in the straight direction for the 2D image and the polarization of lights (dotted arrow) refracted in the preset direction for the 3D image may be maintained without being adjusted.

When the lights passing through the active QWP 121 are incident on the linear polarizer 122, the linear polarizer 122 may selectively transmit only light of a specific polarization. The linear polarizer 122 may selectively transmit only the right circularly polarized or left circularly polarized. However, it is set to selectively transmit only the right circularly polarized light.

For example, as illustrated in FIG. 12, in the case of providing the 2D image, the linear polarizer 122 may emit lights in the straight direction through the geometric phase lens 130 and the lenticular lens 140, and then selectively transmit only the lights adjusted to the right circular polarization through the active QWP 121. Accordingly, the display module 100 may provide the 2D image.

For example, as illustrated in FIG. 13, in the case of providing the 3D image, the linear polarizer 122 may refract lights in the preset direction through the geometric phase lens 130 and the lenticular lens 140, and then selectively transmit only the polarized lights through the active QWP 121. Accordingly, the display module 100 may provide the 3D image.

In the above, according to the embodiments described above with reference to FIGS. 11 to 13, the display module 100 may couple the lenticular lens 140 for implementing the 3D image to the geometric phase lens 130 having different optical characteristics depending on the polarization of light, and control the activation state of the active QWP 12 of the polarization adjustment unit 120, thereby implementing the 2D/3D switching display.

In particular, when the polarization adjustment unit 120 is arranged over the geometric phase lens 130 and the lenticular lens 140 as illustrated in FIGS. 11 to 13, the difficulty of the process of arranging the polarization adjustment unit 120 over the lenticular lens 140 having the shape of the convex lens may increase, and a support unit may be required to support the polarization adjustment unit 120.

However, when the polarization adjustment unit 120 is arranged between the light emitting unit 110 and the geometric phase lens 130, since it is difficult to implement the efficiency of the geometric phase lens 130 at 100%, noise may be generated in the light that passes through the polarization adjustment unit 120 and then through the geometric phase lens 130 and the lenticular lens 140, while, as illustrated in FIGS. 11 to 13, when the polarization adjustment unit 120 is arranged over the geometric phase lens 130 and the lenticular lens 140, noise may not be generated because it passes through the geometric phase lens 130 and the lenticular lens 140 and then through the polarization adjustment unit 120.

In the above, embodiments have been described such that various positional relationships between the polarization adjustment unit 120, the geometric phase lens 130, and the lenticular lens 140 according to the present disclosure. However, in addition to the embodiments described above, within the scope of achieving the object of the present disclosure, various positional relationships between the polarization adjustment unit 120 (linear polarizer 122 and active QWP 121), the geometric phase lens 130, and the lenticular lenses 140 may be applied.

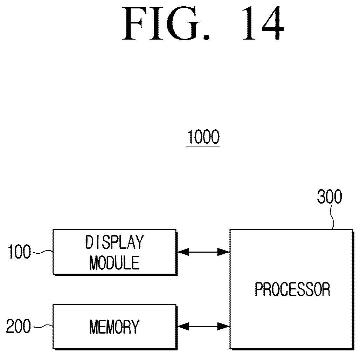

FIG. 14 is a block diagram illustrating a configuration of an electronic device 1000 according to one or more embodiments of the present disclosure.

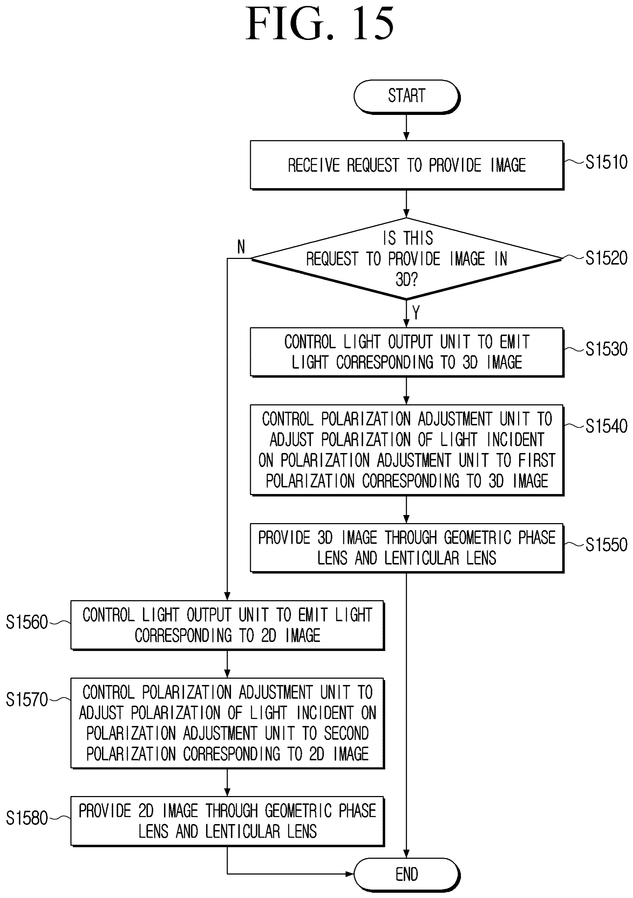

As illustrated in FIG. 14, the electronic device 1000 according to the embodiment of the present disclosure may include the display module 100, a memory 200, and a processor 300. However, the components illustrated in FIG. 15 are merely examples, and in carrying out the present disclosure, in addition to the components illustrated in FIG. 15, new components such as a communication unit, an input unit, or an output unit may be added or some components may be omitted.

The display module 100 refers to a component that may display an image, and in particular, refers to the 2D/3D switching display module 100 that may provide both the 2D image and 3D image. Since the display module 100 has been described above with reference to FIGS. 1 to 13, duplicate description of the same contents will be omitted. That is, various embodiments described above with reference to FIGS. 1 to 13 may similarly be applied to the display module 100 included in the electronic device 1000.

At least one instruction regarding the electronic device 1000 may be stored in the memory 200. The memory 200 may store an operating system (O/S) for driving the electronic device 1000. In addition, the memory 200 may store various software programs or applications for operating the electronic device 1000 according to various embodiments of the present disclosure. The memory 200 may include a semiconductor memory such as a flash memory, a magnetic storage medium such as a hard disk, or the like.

Various software modules for operating the electronic device 1000 according to various embodiments of the present disclosure may be stored in the memory 200, and the processor 300 may execute various software modules stored in the memory 200 to control the operation of the electronic device 1000. That is, the memory 200 may be accessed by the processor 300, and the reading/recording/correction/deletion/update, and the like, of data may be performed by the processor 300.

In the present disclosure, the term 'memory 200' includes the memory 200, a read only memory (ROM) (not illustrated) in the processor 300, a random access memory (RAM) (not illustrated), or a memory card (not illustrated) (for example, a micro secure digital (SD) card or a memory stick) mounted in the electronic device 1000.

In particular, the memory 200 may store various information/data such as information on what polarized light to emit through the light emitting unit 110 when providing the 3D image and when providing the 2D image, information on what polarization the polarization adjustment unit 120 adjusts the polarization of light to, the mapping information on the direction of light for each pixel to provide a 3D image, the mapping information on the direction of light for each sub-pixel to correct the chromatic aberration of the geometric phase lens 130, and information for controlling the activation state of the active QWP 121.

In addition, various pieces of information necessary within the scope for achieving the object of the present disclosure may be stored in the memory 200, and the information stored in the memory 200 may be updated as received from an external device or input by a user.

The processor 300 controls an overall operation of the electronic device 1000. Specifically, the processor 330 is connected to the configuration of the electronic device 1000 including the display module 100 and the memory 200, and may control an overall operation of the electronic device 1000 by executing at least one instruction stored in the memory 200 as described above.

The processor 300 may be implemented in various schemes. For example, the processor 300 may be implemented by at least one of, an application specific integrated circuit (ASIC), an embedded processor, a microprocessor, a hardware control logic, a hardware finite state machine (FSM), and a digital signal processor (DSP). In the present disclosure, the term processor 300 may be used as meaning including a central processing unit (CPU), a graphic processing unit (GPU), a micro processing unit (MPU), and the like.

The processor 300 may include at least one timing controller (TCON) that controls the driving of the light emitting unit 110 and a panel driver that controls the driving of the display panel.

The timing controller may control the panel driver to control the light emitting unit 110. The timing controller may adjust the image data stored in the memory 200 to the signal required by the panel driving unit and transmit the adjusted signal to the panel driving unit, so the panel driving unit may control the driving of the light emitting unit 110.

The panel driving unit may control the driving of the light emitting unit 110 based on a signal received from the timing control. For example, the panel driving unit may include a plurality of driver integrated circuits (ICs) and a plurality of pixel driving circuits. In addition, the plurality of driver ICs may control light emission of the plurality of light emitting elements of the light emitting unit 110 connected to each of the plurality of pixel driving circuits by driving the plurality of pixel driving circuits.

In particular, the processor 300 may control the display module 100 to provide the 3D image or the 2D image. When providing the 3D image or the 2D image, the processor 300 may control the light emitting unit 110, the polarization adjustment unit 120, etc., in different ways to implement the 2D/3D switching display.

The processor 300 may receive a request to provide an image. As described above, the 'request to provide an image' may be received based on a user input, received from an external device, or received based on the occurrence of an event predefined as requiring the provision of the image.

For example, the request to provide an image may be received based on a user's touch input for selecting an image to be played, a control signal received from a remote control device, etc. In addition, the request to provide an image may be received based on events occurring in the electronic device 1000, such as turning on the electronic device 1000 including the display module 100 and unlocking the electronic device 1000.

When the request to provide an image is received, the processor 300 may identify (or determine) whether the request to provide an image is a request to provide an image in three dimensions or a request to provide an image in two dimensions. That is, the processor 300 may analyze whether the request to provide an image is the request to provide an image in three dimensions or the request to provide an image in two dimensions, and distinguish the type of request for providing an image according to the analysis results. In addition, the processor 300 may acquire information on whether the request to provide an image is the request to provide an image in 3D or the request to provide an image in 2D.

The information (or a signal corresponding thereto) on whether the request to provide an image is a request to provide a 3D image or a request to provide a 2D image may be transmitted in synchronization with both the light emitting unit 110 and the polarization adjustment unit 120.

When the request to provide an image is the request to provide an image in three dimensions, the processor 300 may control the light emitting unit 110 to emit light corresponding to the 3D image. When the request to provide an image is the request to provide an image in three dimensions, the processor 300 may transmit the control signal to the light emitting unit 110 to emit the light corresponding to the 3D image. When the control signal is received from the processor 300, the light emitting unit 110 may respond to the request to provide an image and emit the light corresponding to the 3D image based on the 3D image data stored in the memory 200. Here, unlike the '2D image data' described later, the '3D image data' may further include not only color information for each pixel according to horizontal/vertical coordinates on a plane, but also location and color information in 3D space according to depth coordinates.

In addition, the processor 300 may transmit the control signal to the polarization adjustment unit 120 to adjust the polarization of light incident on the polarization adjustment unit 120 to the first polarization corresponding to the 3D image. When the control signal is received from the processor 300, the polarization adjustment unit 120 may adjust the polarization of light incident on the polarization adjustment unit 120 to the first polarization corresponding to the 3D image. Accordingly, the processor 300 may provide the 3D image through the geometric phase lens 130 and the lenticular lens 140.

When the request to provide an image is the request to provide an image in two dimensions, the processor 300 may control the light emitting unit 110 to emit light corresponding to the 3D image. When the request to provide an image is the request to provide an image in two dimensions, the processor 300 may transmit the control signal to the light emitting unit 110 to emit the light corresponding to the 2D image. When the control signal is received from the processor 300, the light emitting unit 110 may respond to the request to provide an image and emit the light corresponding to the 2D image based on the 2D image data stored in the memory 200.

In addition, the processor 300 may transmit the control signal to the polarization adjustment unit 120 to adjust the polarization of light incident on the polarization adjustment unit 120 to the second polarization corresponding to the 2D image. When the control signal is received from the processor 300, the polarization adjustment unit 120 may adjust the polarization of light incident on the polarization adjustment unit 120 to the second polarization corresponding to the 2D image. Accordingly, the processor 300 may provide the 2D image through the geometric phase lens 130 and the lenticular lens 140.

When the polarization adjustment unit 120 is arranged over the geometric phase lens 130 and the lenticular lens 140, the processor 300 may provide the 3D image or 2D image by controlling the activation state of the active QWP 121 of the polarization adjustment unit 120.

In detail, when the request to provide the 2D image is received, the processor 300 may control the active QWP 121 to be activated. Accordingly, the active QWP 121 may adjust the polarization of lights emitted through the geometric phase lens 130 and the lenticular lens 140 to the opposite polarization, so the lights emitted in the straight direction through the linear polarizer 122 for the 2D image may be output selectively.

When the request to provide a 3D image is received, the processor 300 may control the active QWP 121 not to be activated. Accordingly, the active QWP 121 may not adjust the polarization of lights emitted through the geometric phase lens 130 and the lenticular lens 140, so the lights refracted in the preset direction through the linear polarizer 122 for the 3D image may be output selectively.

In addition, at least some of various embodiments described above with reference to FIGS. 1 to 13 may be implemented by the control of the processor 300.

FIG. 15 is a flowchart illustrating a controlling method of the electronic device 1000 according to one or more embodiments of the present disclosure.

As illustrated in FIG. 15, the electronic device 1000 may receive the request to provide an image (S1510). When the request to provide an image is received, the electronic device 1000 may identify whether the request to provide an image is a request to provide an image in three dimensions or a request to provide an image in two dimensions (S1520).

When the request to provide an image is the request to provide an image in three dimensions (S1520-Y), the electronic device 1000 may control the light emitting unit 110 to emit light corresponding to the 3D image (S1530). In addition, the electronic device 1000 may control the polarization adjustment unit 120 to adjust the polarization of light incident on the polarization adjustment unit 120 to the first polarization corresponding to the 3D image (S1540). Accordingly, the electronic device 1000 may provide the 3D image through the geometric phase lens 130 and the lenticular lens 140 (S1550).

The information (or signal) on whether the request to provide an image is a request to provide a 3D image or a request to provide a 2D image may be transmitted in synchronization with both the light emitting unit 110 and the polarization adjustment unit 120.

When the request to provide an image is the request to provide an image in two dimensions (S1520-N), the electronic device 1000 may control the light emitting unit 110 to emit light corresponding to the 2D image (S1560). In addition, the electronic device 1000 may control the polarization adjustment unit 120 to adjust the polarization of light incident on the polarization adjustment unit 120 to the second polarization corresponding to the 2D image (S1570). Accordingly, the electronic device 1000 may provide the 2D image through the geometric phase lens 130 and the lenticular lens 140 (S1580).

The controlling method of the electronic device 1000 according to the above-described embodiment may be implemented as a program and provided to the electronic device 1000. In particular, a program including the controlling method of the electronic device 1000 may be provided by being stored in a non-transitory computer readable medium.

In the non-transitory computer readable medium including a program executing the controlling method of the electronic device 1000, the controlling method of the electronic device 1000 may include receiving a request to provide an image, identifying whether a request to provide the image is a request to provide the image in three dimensions, when the request to provide an image is a request to provide an image in three dimensions, controlling a light emitting unit 110 to emit light corresponding to the 3D image, and adjusting a polarization of light incident on the polarization adjustment unit 120 to a first polarization corresponding to the 3D image, and when the request to provide an image is a request to provide an image in two dimensions, controlling the light emitting unit 110 to emit light corresponding to the 2D image, and controlling the polarization adjustment unit 120 to adjust the polarization of light incident on the polarization adjustment unit 120 to a second polarization corresponding to the 2D image.

In the above description, the controlling method of the electronic device 1000 and the computer-readable recording medium including the program for executing the controlling method of the electronic device 1000 have been briefly described, but this is only for omitting redundant description, and various embodiments of the electronic device 1000 are also applicable to the computer-readable recording medium including the controlling method of the electronic device 1000 and the program for executing the controlling method of the electronic device 1000.

The machine-readable storage medium may be provided in a form of a non-transitory storage medium. Here, the "non-transitory storage medium" means that the storage medium is a tangible device, and does not include a signal (for example, electromagnetic waves), and the term does not distinguish between the case where data is stored semi-permanently on a storage medium and the case where data is temporarily stored thereon. For example, the "non-transitory storage medium" may include a buffer in which data is temporarily stored.

According to an example embodiment, the methods according to the diverse example embodiments disclosed in the disclosure may be included and provided in a computer program product. The computer program product may be traded as a product between a seller and a purchaser. The computer program product may be distributed in the form of a machine-readable storage medium (for example, compact disc read only memory (CD-ROM)), or may be distributed (for example, download or upload) through an application store (for example, Play Store^{™}) or may be directly distributed (for example, download or upload) between two user devices (for example, smart phones) online. In a case of the online distribution, at least some of the computer program products (for example, downloadable app) may be at least temporarily stored in a machine-readable storage medium such as the memory 200 of a server of a manufacturer, a server of an application store, or a relay server, or may be temporarily generated.

Hereinabove, each of components (for example, modules or programs) according to various embodiments described above may include a single entity or a plurality of entities, and some of the corresponding sub-components described above may be omitted or other sub-components may be further included in the diverse embodiments. Alternatively or additionally, some components (e.g., modules or programs) may be integrated into one entity and perform the same or similar functions performed by each corresponding component prior to integration.

Operations performed by the modules, the programs, or the other components according to the diverse embodiments may be executed in a sequential manner, a parallel manner, an iterative manner, or a heuristic manner, at least some of the operations may be performed in a different order or be omitted, or other operations may be added.

The term "unit" or "module" used in the disclosure may include units configured by hardware, software, or firmware, and may be used compatibly with terms such as, for example, logics, logic blocks, components, circuits, or the like. The "unit" or "module" may be an integrally configured component or a minimum unit performing one or more functions or a part thereof. For example, the module may be configured by an application-specific integrated circuit (ASIC).

Various embodiments of the present disclosure may be implemented by software including instructions stored in a machine-readable storage medium (for example, a computer-readable storage medium). A machine may be an apparatus that invokes the stored instruction from the storage medium and may be operated depending on the invoked instruction, and may include the electronic device (for example, the electronic device 1000) according to the disclosed embodiments.

In a case where a command is executed by the processor, the processor may directly perform a function corresponding to the command or other components may perform the function corresponding to the command under a control of the processor. The command may include codes created or executed by a compiler or an interpreter.

Hereinafter, although embodiments of the present disclosure have been illustrated and described, the present disclosure is not limited to the above-described specific embodiments, but may be variously modified by those skilled in the art to which the present disclosure pertains without departing from the gist of the present disclosure as disclosed in the accompanying claims. These modifications should also be understood to fall within the scope and spirit of the present disclosure.

## Claims

1. A display module comprising:
a light emitter configured to emit light corresponding to image data through a plurality of pixels;
a polarization adjuster configured to, based on a request to provide an image in three dimensions or two dimensions, adjust a polarization of light incident from the light emitter to a first polarization or a second polarization different from the first polarization;
a geometric phase lens configured to operate as a convex lens or a concave lens based on the polarization of light incident from the polarization adjuster; and
a lenticular lens configured to output light incident from the geometric phase lens in a preset direction,
wherein, based on the light emitted from the light emitter being adjusted to the first polarization through the polarization adjuster, the geometric phase lens is configured to operate as the convex lens, and the light incident on the lenticular lens from the geometric phase lens operating as the convex lens is refracted by the lenticular lens and output in a first direction to provide a three-dimensional (3D) image,
wherein, based on the light emitted from the light emitter being adjusted to the second polarization through the polarization adjuster, the geometric phase lens is configured to operate as the concave lens, and the light incident on the lenticular lens from the geometric phase lens operating as the concave lens is transmitted through the lenticular lens and is output in a second direction to provide a two-dimensional (2D) image, and
wherein the second direction is different from the first direction.

2. The display module of claim 1, wherein the polarization adjuster is further configured to:
based on the request being the request to provide the image in three dimensions, adjust a polarization of the light incident from the light emitter to the first polarization, and
based on the request being the request to provide the image in two dimensions, adjust the polarization of the light incident from the light emitter to the second polarization.

3. The display module of claim 2, wherein the polarization adjuster is provided between the light emitter and the geometric phase lens.

4. The display module of claim 1, wherein the lenticular lens is a lens array comprising a plurality of sub-lenses arranged at preset intervals.

5. The display module of claim 1, wherein the polarization adjuster comprises a linear polarizer configured to linearly transform a polarization of the light emitted through each of the plurality of pixels, and an active quarter-wave plate (active QWP) configured to adjust the light incident through the linear polarizer to right circularly polarized or left circularly polarized.

6. The display module of claim 1, wherein a first focal length of the geometric phase lens and a second focal length of the lenticular lens are the same, and
wherein based on the geometric phase lens operating as the convex lens, a third focal length of light passing through both the geometric phase lens and the lenticular lens is half of the first focal length and the second focal length.

7. The display module of claim 1, wherein the first direction is a direction for mapping directions of each light emitted through each of the plurality of pixels to one of a plurality of views for providing the 3D image.

8. The display module of claim 7, wherein each of the plurality of pixels includes a plurality of sub-pixels,
wherein the plurality of sub-pixels include a first sub-pixel configured to emit red light, a second sub-pixel configured to emit green light, and a third sub-pixel configured to emit blue light, and
wherein the first direction is a direction for mapping directions of each light emitted through each of the plurality of sub-pixels to one of the plurality of views that compensate for chromatic aberration of the geometric phase lens while providing the 3D image.

9. The display module of claim 1, further comprising a gradient-index (GRIN) lens configured to have a different refractive index depending on a position within a lens,
wherein the different refractive index depending on the position within the lens is set to compensate for chromatic aberration of the geometric phase lens.

10. The display module of claim 1, wherein the geometric phase lens is formed using a meta atom, and
wherein the meta atom is provided in the geometric phase lens based on a phase profile that compensates for optical aberrations of the lenticular lens.

11. An electronic device comprising:
a display module;
at least one memory configured to store instructions; and
at least one processor configured to execute the instructions to control the display module to provide a three-dimensional (3D) image or a two-dimensional (2D) image,
wherein the display module comprises:
a light emitter configured to emit light corresponding to image data through a plurality of pixels;
a polarization adjuster configured to, based on a request to provide an image in three dimensions or two dimensions, adjust a polarization of light incident from the light emitter to a first polarization or a second polarization different from the first polarization;
a geometric phase lens configured to operate as a convex lens or a concave lens based on the polarization of light incident from the polarization adjuster; and
a lenticular lens configured to output light incident from the geometric phase lens in a preset direction,
wherein, based on the light emitted from the light emitter being adjusted to the first polarization through the polarization adjuster, the geometric phase lens is configured to operate as the convex lens, and the light incident on the lenticular lens from the geometric phase lens operating as the convex lens is refracted by the lenticular lens and output in a first direction to provide the 3D image,
wherein, based on the light emitted from the light emitter being adjusted to the second polarization through the polarization adjuster, the geometric phase lens is configured to operate as the concave lens, and the light incident on the lenticular lens from the geometric phase lens operating as the concave lens is transmitted through the lenticular lens and is output in a second direction to provide the 2D image, and
wherein the second direction is a different direction from the first direction.

12. The electronic device of claim 11, wherein the at least one processor is further configured to execute the instructions to:
based on the request being the request to provide the image in three dimensions, control the light emitter to emit light corresponding to the 3D image and control the polarization adjuster to adjust a polarization of light incident on the polarization adjuster from the light emitter to the first polarization, and
based on the request being the request to provide the image in two dimensions, control the light emitter to emit light corresponding to the 2D image and control the polarization adjuster to adjust the polarization of light incident on the polarization adjuster from the light emitter to the second polarization.

13. The electronic device of claim 11, wherein the polarization adjuster is provided between the light emitter and the geometric phase lens.

14. The electronic device of claim 11, wherein the lenticular lens is a lens array comprising a plurality of sub-lenses arranged at preset intervals.

15. The electronic device of claim 11, wherein a first focal length of the geometric phase lens and a second focal length of the lenticular lens are the same, and
wherein based on the geometric phase lens operating as the convex lens, a third focal length of light passing through both the geometric phase lens and the lenticular lens is half of the first focal length and the second focal length.
